# EUROPÄISCHE PATENTSCHRIFT

(11) **EP 1 462 343 B1**
(45) Veröffentlichungstag und Bekanntmachung des Hinweises auf die Patenterteilung: **11.07.2007**
(21) Anmeldenummer: 03100824.6
(22) Anmeldetag: 28.03.2003
(51) Int. Cl.: B62D 21/11, B60G 11/16

(54) **Radaufhängung für ein Kraftfahrzeug**
Wheel suspension for a motor vehicle
Suspension de roue pour un véhicule

(43) Veröffentlichungstag der Anmeldung: 29.09.2004
(73) Patentinhaber: Ford Global Technologies, LLC, A subsidary of Ford Motor Company, Dearborn, MI 48126 (US)
(72) Erfinder: Weshendorff, Joerg, 58452 Witten (DE)
(74) Vertreter: Drömer, Hans-Carsten

(56) Entgegenhaltungen:
- EP-A- 1 188 643
- DE-A- 10 018 058
- DE-A- 10 109 636
- PATENT ABSTRACTS OF JAPAN vol. 2000, no. 12, 3. Januar 2001 (2001-01-03) -& JP 2000 255236 A (MITSUBISHI MOTORS CORP), 19. September 2000 (2000-09-19)

## Beschreibung

Die Erfindung betrifft eine Radaufhängung für ein Kraftfahrzeug, enthaltend einen unteren Lenker zur Anbringung eines Rades, einen an der Karosserie gelagerten Fahrschemel und eine Feder. Ferner betrifft die Erfindung ein Verfahren zur Montage einer derartigen Radaufhängung.

Insbesondere für die Hinterräder von Kraftfahrzeugen sind Einzelradaufhängungen bekannt, bei welchen die Räder an einem "unteren" (Quer-)Lenker angebracht sind. Zur Dämpfung der Übertragung von Geräuschen und Schwingungen auf die Karosserie wird der untere Lenker dabei häufig nicht direkt an der Karosserie befestigt, sondern an einem Fahrschemel (Zwischengestell, Hilfsrahmen), welcher seinerseits über Gummilager am Längsträger der Karosserie befestigt ist. Des Weiteren ist bei einer derartigen Radaufhängung eine Schraubenfeder am unteren Lenker gelagert, deren oberes Ende sich über einen Federteller am Fahrschemel abstützt.

Bei der vorstehend beschriebenen Radaufhängung verlaufen alle zwischen Rad und Karosserie übertragenen Kräfte über den Fahrschemel, was eine erhebliche Belastung für dessen Gummilager darstellt. Aus diesem Grunde sind Abwandlungen der Radaufhängung bekannt, bei denen sich die Feder mit dem Federteller nicht am Fahrschemel, sondern direkt an der Karosserie abstützt. Die Gummilager des Fahrschemels werden auf diese Weise spürbar entlastet. Die Montage einer derartigen Radaufhängung ist jedoch problematisch, da die Feder vor der Montage an der separaten Radaufhängung freisteht. Erst während der Montage der Radaufhängung wird die Feder an die Karosserie (oder alternativ bei Vormontage an der Karosserie: am unteren Lenker) angesetzt, wobei sich diese lösen und die Montagearbeiter verletzen kann. Ferner wird bei Ansetzen der verhältnismäßig langen und steifen Federn die Karosserie von den Montagehalterungen abgehoben. Auch dies führt zu einem beträchtlichen Unfallrisiko.

Aus der EP 1 188 643 A1 ist eine Radaufhängung mit einer Feder und einem Federteller bekannt, wobei der Federteller am oberen Ende der Feder angeordnet ist. Weiterhin sind ein unterer Lenker zur Anbringung eines Rades sowie ein Fahrschemel vorgesehen, jedoch keine Montagehilfe für die Montage der Feder.

Aus der DE 100 18 058 A1 ist eine Montagehilfe für ein Federbein, welches an eine Karosserie eines Kraftfahrzeuges montiert werden soll, bekannt. Hierzu weist ein Blech der Karosserie in dem Bereich, in dem das Federbein befestigt werden soll, eine domartige Erhebung mit einer Öffnung auf. Die Montagehilfe umfasst eine Mehrzahl von Haken sowie einen Zentrierkegel. Diese Montagehilfe dient lediglich dazu, das Federbein relativ zur Karosserie vor dem eigentlichen Festziehen von Verschraubungen auszurichten und zu halten, so daß die Schrauben der Verschraubung eingesetzt und festgezogen werden können.

Vor diesem Hintergrund war es Aufgabe der vorliegenden Erfindung, eine Radaufhängung mit einer an der Karosserie abgestützten Feder bereitzustellen, welche leichter zu montieren ist.

Diese Aufgabe wird durch eine Radaufhängung mit den Merkmalen des Anspruchs 1 sowie durch ein Verfahren mit den Merkmalen des Anspruchs 7 gelöst.

Vorteilhafte Ausgestaltungen sind in den Unteransprüchen enthalten.

Die erfindungsgemäße Radaufhängung für ein Kraftfahrzeug enthält einen Lenker (im Folgenden entsprechend der Montageposition "unterer Lenker" genannt), welcher Mittel zur drehbeweglichen Anbringung eines Rades aufweist. Des Weiteren enthält die Radaufhängung einen Fahrschemel mit Lagern zur Befestigung des Fahrschemels an der Karosserie eines Kraftfahrzeuges. Vorzugsweise ist der untere Lenker gelenkig mit dem Fahrschemel verbunden. Typischerweise erstreckt sich der Fahrschemel über die Fahrzeugbreite, so daß an beiden Enden jeweils eine Radaufhängung ausgebildet werden kann. Die erfindungsgemäße Radaufhängung enthält ferner eine (Schrauben-)Feder, deren eines Ende (im Folgenden entsprechend der Montageposition "unteres Ende" genannt) am unteren Lenker angeordnet ist und deren anderes ("oberes") Ende von einem Federteller abgedeckt wird. Die Radaufhängung ist dadurch gekennzeichnet, daß der Fahrschemel eine Halterung aufweist, auf welcher sich ein Teil des Federtellers abstützt, wenn die Radaufhängung (noch) nicht an der Karosserie eines Kraftfahrzeuges montiert ist.

Durch die am Fahrschemel ausgebildete Halterung und deren Zusammenwirken mit dem Federteller wird erreicht, daß auch bei demontierter Radaufhängung die Feder nicht völlig freisteht, sondern zwischen unterem Lenker und Halterung des Fahrschemels fest eingespannt ist. Die Montageprozedur für eine derartige Radaufhängung kann daher im Wesentlichen so ablaufen wie bei Radaufhängungen, bei denen die Feder permanent (d. h. auch im montierten Zustand) zwischen unterem Lenker und Fahrschemel sitzt. Es ist daher weder eine andere Ausgestaltung der Montagestation noch eine Änderung des Montageablaufes erforderlich. Da sich nur ein Teil des Federtellers an der Halterung abstützt, kann der freiliegende Teil des Federtellers bei der Montage in Kontakt zur Karosserie treten und bei Erreichen der Montage-Endposition die eigentliche Kraftübertragung von der Feder übernehmen. D. h., daß im montierten Zustand der Federteller von der Halterung des Fahrschemels abgehoben ist und somit keine Kopplung zwischen Feder und Fahrschemel mehr besteht, was die erwähnten Vorteile in Bezug auf eine Entlastung der Lager des Fahrschemels hat.

Die am Fahrschemel angebrachte Halterung ist vorzugsweise ringförmig ausgebildet, so daß diese den Federteller ringförmig umgeben kann und dieser sich mit seinem (gegebenenfalls verbreiterten) Rand auf der Halterung abstützen kann. Auf diese Weise kann eine gleichmäßige, sichere und zentrierte Lagerung des Federtellers auf der Halterung erreicht werden.

Vorzugsweise ist der Federteller mit einem Zentrierfortsatz versehen, welcher im Montagezustand in Richtung der Karosserie weist. Mit einem solchen Zentrierfortsatz und einem korrespondierenden Zentrierloch an der Karosserie kann sichergestellt werden, daß die Feder bei der Montage "automatisch" eine definierte Position an der Karosserie annimmt.

Weiterhin kann der Federteller mit dem Träger einer Zusatzfeder (spring aid) kombiniert sein, um einen besonders kompakten Aufbau zu erreichen.

Die Lager des Fahrschemels können durch gummielastische Elemente gebildet werden, welche für eine gute Dämpfung von Geräuschen und Schwingungen gegenüber der Karosserie sorgen. Vorzugsweise ist der Fahrschemel auf jeder Seite des Kraftfahrzeuges über zwei Lager, d. h. insgesamt über vier Lager abgestützt.

Bei dem unteren Lenker handelt es sich vorzugsweise um einen Querlenker.

Die Erfindung betrifft ferner ein Verfahren zur Montage einer Radaufhängung, welches die folgenden Schritte aufweist:
a) Die Bereitstellung einer Radaufhängung der oben erläuterten Art (mit einem unteren Lenker, einem Fahrschemel und einer Feder), bei welcher die Feder über den Federteller an der Halterung des Fahrschemels abgestützt ist. Die Feder steht daher nicht frei, und die Radaufhängung befindet sich in einem vorbereiteten, stabilen Zustand.
b) Das Ansetzen der Radaufhängung an die Karosserie eines Kraftfahrzeuges derart, daß sich der Federteller an der Karosserie abstützt. Dies ist möglich, da der Federteller nur teilweise an der Halterung abgestützt ist und somit noch freie Kontaktflächen für eine Abstützung an der Karosserie aufweist. Die Positionierung des Federtellers an der Karosserie wird vorzugsweise durch einen Zentrierfortsatz am Federteller und eine korrespondierende Zentrieröffnung an der Karosserie unterstützt.
c) Die Befestigung des Fahrschemels an der Karosserie des Kraftfahrzeuges, wobei die Feder gestaucht wird und der Federteller von der Halterung des Fahrschemels abhebt. Die Befestigung kann insbesondere mit Hilfe von Schraubbolzen geschehen.

Das geschilderte Verfahren hat den Vorteil, daß die Radaufhängung im Wesentlichen wie eine herkömmliche Radaufhängung, bei welcher die Feder sich permanent am Fahrschemel abstützt, montiert werden kann. Gleichwohl wird aufgrund des Abhebens des Federtellers von der Halterung in Schritt c) im montierten Zustand eine direkte Kraftkopplung zwischen unterem Lenker und Karosserie erreicht, wobei die Feder vom Fahrschemel unabhängig ist.

Vorzugsweise werden bei dem Verfahren der Fahrschemel und der Federteller an einem Längsträger der Karosserie angebracht beziehungsweise gelagert, so daß die Radkräfte besonders gleichmäßig in die Karosserie eingeleitet werden.

Bei der Bereitstellung der Radaufhängung in Schritt a) befindet diese sich vorzugsweise in einer Montagehilfe, so daß die Radaufhängung sicher gehandhabt werden kann. Dabei sollte die Montagehilfe das Anheben der Radaufhängung bei deren Ansetzen an die Karosserie in Schritt b) erlauben.

Im Folgenden wird die Erfindung mit Hilfe der Figuren beispielhaft näher erläutert. Es zeigen:
- Fig. 1: eine Explosionsdarstellung der erfindungsgemäßen Radaufhängung;
- Fig. 2: einen schematischen Schnitt durch die Radaufhängung zu Beginn der Montage;
- Fig. 3: einen Schnitt entsprechend Figur 2 in einem Zwischenstadium der Montage;
- Fig. 4: einen Schnitt entsprechend Figur 2 am Ende der Montage, und
- Fig. 5: einen Schnitt durch die endmontierte Radaufhängung senkrecht zur Schnittrichtung von Figur 4.

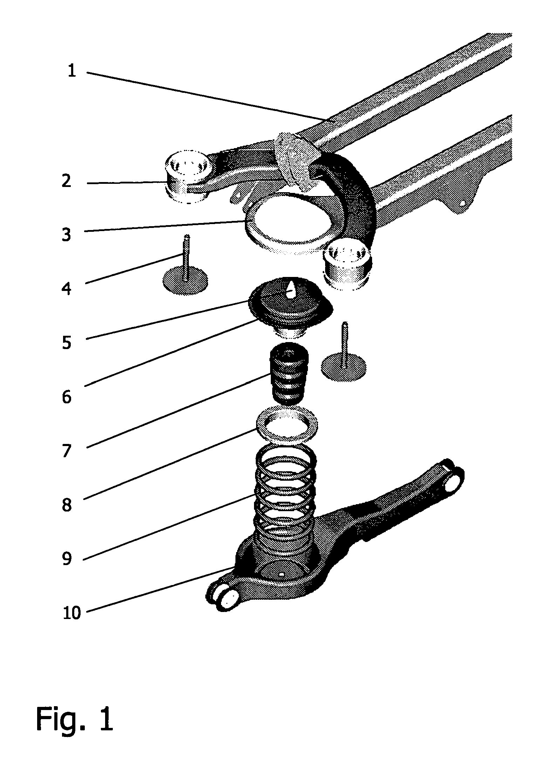

Figur 1 zeigt in einer Explosionsdarstellung alle wesentlichen Teile der erfindungsgemäßen Radaufhängung. Diese umfaßt im Wesentlichen einen Fahrschemel 1, von dem in der Figur nur ein Ende dargestellt ist. Der Fahrschemel 1 erstreckt sich über die Breite eines Kraftfahrzeuges und ist an beiden Enden spiegelsymmetrisch ausgebildet. Am dargestellten Ende des Fahrschemels 1 sind zwei Gummilager 2 zu sehen, über welche der Fahrschemel 1 an der Karosserie eines Kraftfahrzeuges (in Figur 1 nicht dargestellt) gelagert und dort mit Hilfe von Schraubbolzen 4 mit einem breiten Kopf befestigt werden kann.

Des Weiteren umfaßt die Radaufhängung einen unteren Lenker 10, welcher in nicht näher dargestellter Weise das aufzuhängende Rad trägt. Der Lenker 10 ist mit seinem in der Figur rechten Ende im vormontierten Zustand der Radaufhängung am Fahrschemel 1 gelenkig angekoppelt. Weiterhin besitzt der Lenker 10 eine Verbreiterung mit einer Vertiefung, in welcher das untere Ende einer Schraubenfeder 9 gelagert ist.

Die Schraubenfeder 9 ist mit ihrem oberen Ende unter Zwischenschaltung eines Isolationsringes 8 an der Unterseite eines Federtellers 6 abgestützt. Im vormontierten Zustand der Radaufhängung liegt der verbreiterte Rand des Federtellers 6 mit seiner Oberseite an einer ringförmigen, am Fahrschemel 1 angeformten Halterung 3 an, so daß die Feder 9 zwischen unterem Lenker 10 und Fahrschemel 1 in einem vorgespannten Zustand fixiert ist.

Zu erkennen sind in Figur 1 ferner ein Zentrierfortsatz 5 an der Oberseite des Federtellers 6 sowie eine Federhilfe 7, die an der Unterseite des Federtellers 6 gehaltert ist. Eine derartige Doppelfunktion des Federtellers 6 als Abstützung für die Feder 9 und für die Federhilfe 7 ist indes nicht zwingend erforderlich, da sich die Federhilfe 7 auch an einer anderen Stelle wie z. B. an einem Stützstab (nicht dargestellt) der Radaufhängung abstützen kann.

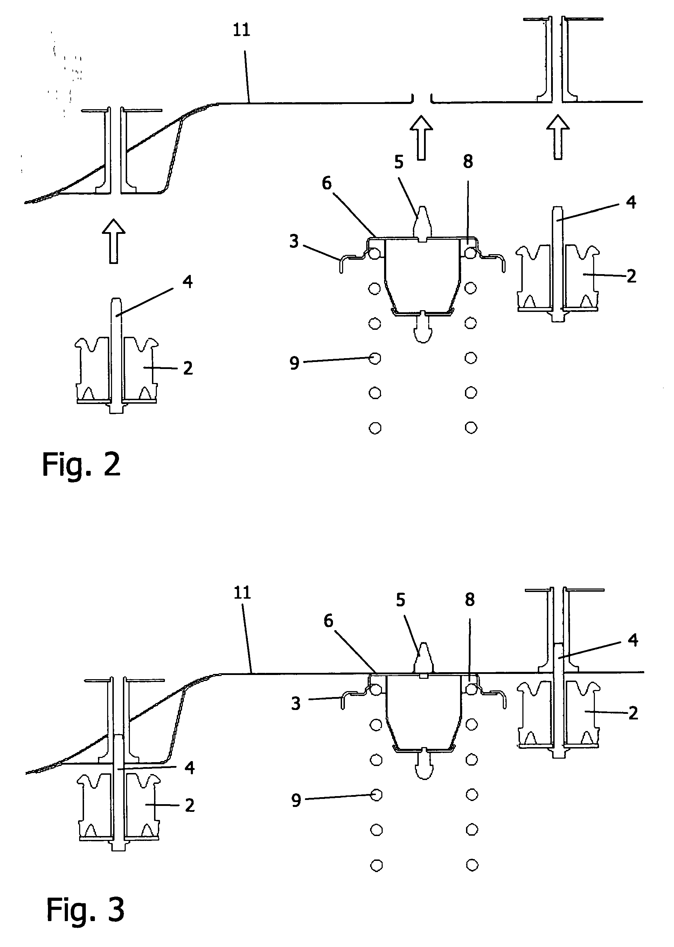

Die Figuren 2, 3 und 4 zeigen jeweils einen schematischen Schnitt in Längsrichtung eines Kraftfahrzeuges durch die erfindungsgemäße Radaufhängung sowie durch den Längsträger 11 des Kraftfahrzeuges in aufeinanderfolgenden Stadien der Montage. Gleiche Bezugszeichen wie in Figur 1 stehen dabei für gleiche Teile, so daß diese nicht erneut erläutert werden sollen.

In Figur 2 ist der erste Schritt der Montage einer erfindungsgemäßen Radaufhängung an einem Kraftfahrzeug dargestellt. Die vormontierte Radaufhängung wird auf einer Montagehilfe (nicht dargestellt) bereitgestellt, an der diese über den Fahrschemel mit sogenannten "C-Haken" festgehalten wird. Da sich die Feder 9 den Rand des Federtellers 6 an der Halterung 3 des Fahrschemels abstützt, liegt keine freistehende Feder vor, die zu Problemen bei der Montage führen könnte. Die ringförmige Halterung 3 des Fahrschemels hält die Anordnung bestehend aus dem Federteller 6 (einschließlich dem Träger für die Federhilfe) und dem Isolationsring 8 in einer zentrierten Stellung fest und verhindert ihr Auseinanderfallen.

Die Montage wird damit fortgesetzt, daß die Montagehilfe die Radaufhängung in Richtung der Pfeile zur Karosserie hin, von welcher der Längsträger 11 angedeutet ist, anhebt. Dabei kann über Montagezapfen eine Voreinstellung der Position der Achse gegenüber der Karosserie erfolgen.

Figur 3 zeigt ein Zwischenstadium des Montageprozesses, in dem der Zentrierfortsatz 5 das mit einem Flansch umgebene zugehörige Loch im Längsträger 11 gefunden und bei seinem Durchtritt hierdurch die Radaufhängung zentriert hat. Durch die selbsttätige Zentrierung der Radaufhängung kann eine schnelle Montage ohne riskante manuelle Eingriffe erfolgen. In dem dargestellten Zustand ist die Radaufhängung gerade so weit angehoben worden, daß die Oberseite des Federtellers 6 die Unterseite des Längsträgers 11 berührt. Zu diesem Zeitpunkt werden auch die vier Schraubbolzen 4 durch entsprechende Bohrungen in den Gummihülsen 2 des Fahrschemels gesteckt und in die zugehörigen Gewinde am Längsträger 11 eingeschraubt. Zwischen den Gummihülsen 2 und dem Längsträger 11 ist zunächst noch ein Spalt vorhanden.

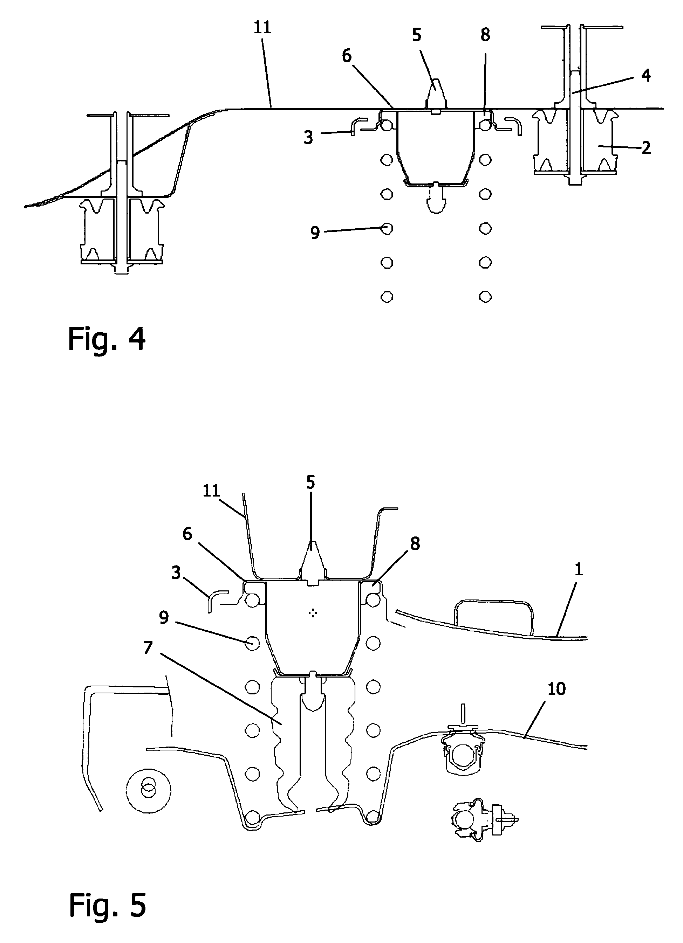

Figur 4 zeigt den Abschluß des Montagevorganges. Die Bolzen 4 sind dabei gegen das Gewicht der Radaufhängung und die Spannkraft der Feder 9 angezogen und vollständig in ihre Gewinde eingeschraubt worden, wobei sie die Radaufhängung an den Längsträger 11 drücken und den zuvor bestehenden Spalt zwischen den Gummihülsen 2 und dem Längsträger 11 schließen. Wichtig ist, daß sich beim Anheben des Fahrschemels dessen Halterung 3 vom Federteller 6, welcher durch den Längsträger 11 festgehalten wird, abhebt. Es besteht daher keine Kopplung mehr zwischen der Feder 9 und dem Fahrschemel.

Nachdem die Montage mit dem Anziehen der Schraubbolzen 4 bis zu einem gewünschten Drehmoment abgeschlossen ist, können die Montagehilfe und zusätzliches Werkzeug (nicht dargestellt) entfernt werden. Vorteilhaft an dem Montageprozeß ist, daß er sich in einer herkömmlichen Montagestation und mit den bekannten Montageschritten ausführen läßt.

Figur 5 zeigt einen Querschnitt durch die endmontierte Radaufhängung in einer Richtung senkrecht zu den Schnitten der Figuren 2 bis 4. Dabei ist an der Radaufhängung zusätzlich noch die Federhilfe 7 erkennbar.

Mit der erfindungsgemäßen Radaufhängung läßt sich somit eine (im montierten Zustand) direkte Kopplung des unteren Lenkers 10 an die Karosserie 11 herstellen, ohne daß dies zu Problemen oder Risiken bei der Montage führt. Dieses Ergebnis wird durch die Halterung 3 am Fahrschemel 1 erreicht, welche im vormontierten Zustand der Radaufhängung die Feder 9 aufnimmt.

## Patentansprüche

1. Radaufhängung für ein Kraftfahrzeug, enthaltend
a) einen unteren Lenker (10) zur Anbringung eines Rades;
b) einen Fahrschemel (1) mit Lagern (2) zur Befestigung an der Karosserie (11) eines Kraftfahrzeuges;
c) eine Feder (9), deren unteres Ende am Lenker (10) und deren oberes Ende in einem Federteller (6) angeordnet ist, wobei sich die Feder (9) im montierten Zustand mit dem Federteller (6) an der Karosserie (11) abstützt;
**dadurch gekennzeichnet, daß**
der Fahrschemel (1) eine Halterung (3) aufweist, auf welcher sich ein Teil des Federtellers (6) abstützt, wenn die Radaufhängung nicht an der Karosserie eines Kraftfahrzeuges montiert ist.

2. Radaufhängung nach Anspruch 1,
**dadurch gekennzeichnet, daß**
die Halterung (3) den Federteller (6) ringförmig umgibt.

3. Radaufhängung nach einem der Ansprüche 1 oder 2,
**dadurch gekennzeichnet, daß**
der Federteller (6) einen Zentrierfortsatz (5) aufweist.

4. Radaufhängung nach mindestens einem der Ansprüche 1 bis 3,
**dadurch gekennzeichnet, daß**
der Federteller (6) mit dem Träger einer Federhilfe (7) kombiniert ist.

5. Radaufhängung nach mindestens einem der Ansprüche 1 bis 4,
**dadurch gekennzeichnet, daß**
die Lager des Fahrschemels (1) durch gummielastische Elemente (2) gebildet werden.

6. Radaufhängung nach mindestens einem der Ansprüche 1 bis 5,
**dadurch gekennzeichnet, daß**
der untere Lenker (10) als Querlenker ausgebildet ist.

7. Verfahren zur Montage einer Radaufhängung, **gekennzeichnet durch** die Schritte
a) Bereitstellung einer Radaufhängung nach mindestens einem der Ansprüche 1 bis 6 in einem Zustand, in dem die Feder (9) über den Federteller (6) an der Halterung (3) des Fahrschemels (1) abgestützt ist;
b) Ansetzen der Radaufhängung an die Karosserie (11) eines Kraftfahrzeuges, so daß sich der Federteller (6) an der Karosserie abstützt;
c) Befestigung des Fahrschemels (1) an der Karosserie (11) des Kraftfahrzeuges, wobei die Feder (9) gestaucht wird und der Federteller (6) von der Halterung (3) des Fahrschemels (1) abhebt.

8. Verfahren nach Anspruch 7,
**dadurch gekennzeichnet, daß**
der Fahrschemel (1) und der Federteller (6) an einem Längsträger (11) der Karosserie gelagert werden.

9. Verfahren nach Anspruch 7 oder 8,
**dadurch gekennzeichnet, daß**
die Radaufhängung in einer Montagehilfe bereitgestellt wird.

## Claims

1. Wheel suspension system for a motor vehicle, containing
a) a lower link (10) for the attachment of a wheel;
b) a chassis underframe (1) having bearings (2) for fastening to the body (11) of a motor vehicle;
c) a spring (9), the lower end of which is arranged on the link (10) and the upper end of which is arranged in a spring plate (6), the spring (9) being supported on the body (11) by the spring plate (6) in the fitted state;
**characterized in that**
the chassis underframe (1) has a mounting (3) on which part of the spring plate (6) is supported when the wheel suspension system is not fitted on the body of a motor vehicle.

2. Wheel suspension system according to Claim 1,
**characterized in that**
the mounting (3) annularly surrounds the spring plate (6).

3. Wheel suspension system according to either of Claims 1 and 2,
**characterized in that**
the spring plate (6) has a centring extension (5).

4. Wheel suspension system according to at least one of Claims 1 to 3,
**characterized in that**
the spring plate (6) is combined with the support of a spring aid (7).

5. Wheel suspension system according to at least one of Claims 1 to 4,
**characterized in that**
the bearings of the chassis underframe (1) are formed by elastomeric elements (2).

6. Wheel suspension system according to at least one of Claims 1 to 5,
**characterized in that**
the lower link (10) is designed as a transverse link.

7. Method for installing a wheel suspension system, comprising the following steps
a) Providing a wheel suspension system according to at least one of Claims 1 to 6 in a state in which the spring (9) is supported on the mounting (3) of the chassis underframe (1) via the spring plate (6);
b) Fitting the wheel suspension system onto the body (11) of a motor vehicle, so that the spring plate (6) is supported on the body;
c) Fastening the chassis underframe (1) to the body (11) of the motor vehicle, the spring (9) being compressed and the spring plate (6) lifting off from the mounting (3) of the chassis underframe (1).

8. Method according to Claim 7,
**characterized in that**
the chassis underframe (1) and the spring plate (6) are mounted on a longitudinal member (11) of the body.

9. Method according to Claim 7 or 8,
**characterized in that**
the wheel suspension system is provided in an installation aid.

## Revendications

1. Suspension de roue pour un véhicule automobile, comprenant :
a) un bras oscillant inférieur (10) pour monter une roue ;
b) un faux-châssis (1) avec des paliers (2) pour la fixation sur la carrosserie (11) d'un véhicule automobile;
c) un ressort (9) dont l'extrémité inférieure est disposée sur le bras oscillant (10) et dont l'extrémité supérieure est disposée dans une coupelle de ressort (6), le ressort (9) s'appuyant dans l'état monté, avec la coupelle de ressort (6), contre la carrosserie (11) ;
**caractérisée en ce que**
le faux-châssis (1) présente une fixation (3) sur laquelle s'appuie une partie de la coupelle de ressort (6) lorsque la suspension de roue n'est pas montée sur la carrosserie d'un véhicule automobile.

2. Suspension de roue selon la revendication 1,
**caractérisée en ce que**
la fixation (3) entoure annulairement la coupelle de ressort (6).

3. Suspension de roue selon l'une quelconque des revendications 1 ou 2,
**caractérisée en ce que**
la coupelle de ressort (6) présente une projection de centrage (5).

4. Suspension de roue selon au moins l'une quelconque des revendications 1 à 3,
**caractérisée en ce que**
la coupelle de ressort (6) est combinée au support d'un élément auxiliaire de ressort (7).

5. Suspension de roue selon au moins l'une quelconque des revendications 1 à 4,
**caractérisée en ce que**
les paliers du faux-châssis (1) sont formés par des éléments (2) en plastique élastomère.

6. Suspension de roue selon au moins l'une quelconque des revendications 1 à 5,
**caractérisée en ce que**
le bras oscillant inférieur (10) est réalisé sous forme de bras oscillant transversal.

7. Procédé de montage d'une suspension de roue, **caractérisé par** les étapes suivantes :
a) mise à disposition d'une suspension de roue selon au moins l'une quelconque des revendications 1 à 6 dans un état dans lequel le ressort (9) est supporté par le biais de la coupelle de ressort (6) sur la fixation (3) du faux-châssis (1) ;
b) mise en place de la suspension de roue sur la carrosserie (11) d'un véhicule automobile de sorte que la coupelle de ressort (6) s'appuie contre la carrosserie ;
c) fixation du faux-châssis (1) à la carrosserie (11) du véhicule automobile, le ressort (9) étant comprimé et la coupelle de ressort (6) se soulevant de la fixation (3) du faux-châssis (1).

8. Procédé selon la revendication 7,
**caractérisé en ce que**
le faux-châssis (1) et la coupelle de ressort (6) sont montés sur un support longitudinal (11) de la carrosserie.

9. Procédé selon la revendication 7 ou 8,
**caractérisé en ce que**
la suspension de roue est fournie dans un système d'aide au montage.
